# EUROPEAN PATENT APPLICATION

(11) **EP 1 486 359 A2**
(43) Date of publication of application: **15.12.2004**
(21) Application number: 04253549.2
(22) Date of filing: 14.06.2004
(51) Int. Cl.: B60G 9/00

(54) **A suspension trailing arm**

(30) Priority: 14.06.2003 GB 0313804
(71) Applicant: Meritor Heavy Vehicle Systems Limited, Wrexham, Clwyd LL12 0PB (GB)
(72) Inventor: Hughes, Thomas, Goostery, Cheshire CW4 8JJ (GB)
(74) Representative: Jones, John Bryn

(57) **Abstract**

A composite suspension trailing arm (232) for heavy commercial vehicles.

## Description

The present invention relates to a suspension trailing arm, and in particular to a composite suspension trailing arm for a heavy commercial vehicle.

Heavy commercial vehicles typically employ trailing arm suspension systems, particularly in relation to rear axles of rigid body vehicles or the axles of trailers of articulated vehicles.

Heavy commercial vehicles (including trucks, buses and coaches) can be distinguished from light commercial vehicles (such as vans) and light passenger vehicles due to one or more of the following characteristics:
1. A laden weight in excess of approximately 3.5 tonnes.
2. The use of air actuated brakes as opposed to hydraulically actuated brakes (because air actuated brakes are more able to withstand the increased heat generated by the repeated braking of a vehicle having a weight in excess of approximately 3.5 tonnes).

Such vehicles (including trailers) also typically employ a pair of spaced parallel beams that run the length of the vehicle and act as the chassis upon which the vehicle body is mounted.

When used in heavy commercial vehicles the trailing arms are typically pivotally mounted to the chassis beams of the vehicle at the front of the arm, the arm extending rearwardly (i.e. towards the rear of the vehicle) to a mounting position for the axle and then further rearwardly to a mounting surface for an air spring, that is itself mounted between the trailing arm and vehicle chassis. Axles in such vehicles are typically substantially rigid beam-type axles. In some circumstances the orientation of the arms may be reversed so as to pivot at the rear of the arm, in which case they are known as "leading arms". For the purposes of this specification the term trailing arm should also be understood to encompass leading arms.

Known heavy vehicle trailing arms are typically constructed either from solid spring steel trailing arms provided with U-bolts and plates to connect an axle to the arm, or fabricated steel plate which is then welded to an axle or axle adapter, or a hybrid of the two aforesaid types. One such fabricated trailing arm is disclosed in US5639110 (Pierce et al.).

Both prior art types seek to provide a rigid connection between the arm and the axle in order to resist bending but have a resilient connection between the chassis and the axle, either by flexing of the spring steel trailing arm or by flexing of a large elastomeric bush (resilient bearing) in the end of a fabricated trailing arm between the chassis and the trailing arm. This enables articulation forces induced during vehicle use to be taken up whilst maintaining tracking and roll stability. It has typically been considered necessary in the case of fabricated trailing arms for use in heavy commercial vehicle applications for these to be manufactured having a closed box-section profile in order to impart sufficient tracking stability to the arm.

One disadvantage of known manufacturing techniques is the restriction placed on the shape of the trailing arm, which in turn restricts the positioning of additional components that are mounted to the arms, such as brakes, air springs, dampers and pivot bushes. This may lead to the suspension packaging (i.e. its space requirement) being inefficient. Another disadvantage of known trailing arms is the time required to secure the trailing arm to an axle, for example by fastening or welding.

The drive to reduce the weight of vehicle components means it also desirable to provide a trailing arm of reduced weight which provides comparable flexibility to known spring steel trailing arms.

An object of the present invention is to provide an improved trailing arm.

According to the present invention there is provided a composite suspension trailing arm for heavy commercial vehicles.

Advantageously this reduces the weight of the trailing arm, which may have knock-on benefits for the fuel consumption or load capacity of a vehicle to which the arm is fitted.

Furthermore, composite manufacturing techniques allow the shape of the trailing arm to be tailored to meet the packaging requirements of additional components mounted to and around the trailing arm. The same manufacturing techniques also allow the properties of the trailing arm to be tailored locally by varying the composition of the composite material used. Hence, for example, a known potential failure point can be reinforced by using a composite material of appropriate composition.

Additionally, composites do not suffer from the same corrosion problems associated with steel components.

According to another aspect of the present invention there is provided a method of making a trailing arm for heavy commercial vehicles comprising the steps of providing a matrix material, providing a reinforcement material, arranging the matrix material and the reinforcement material so as to form a matrix reinforcement composition, then curing the composition to form the trailing arm.

The invention will now be described, by way of example only, with reference to the accompanying drawings, in which:
Figure 1 is a side view of a typical heavy commercial vehicle,
Figure 2 is a perspective view of a prior art suspension assembly,
Figure 3 is a perspective view of another prior art suspension assembly,
Figure 4 is a perspective view of a trailing arm according to the present invention,
Figure 5 is a perspective view of the trailing arm of figure 4 showing the location of suspension components, and
Figure 6 is a plan view of a suspension assembly incorporating two trailing arms according to the present invention.

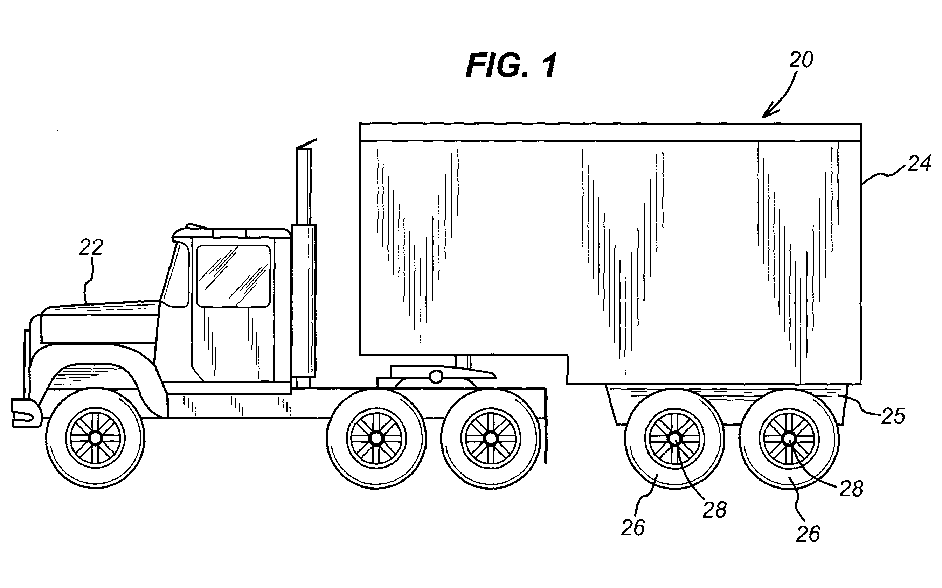

With reference to figure 1, there is shown a heavy commercial vehicle 20 comprising a tractor portion 22 and a trailer portion 24 mounted for articulation relative to the tractor portion. A plurality of wheels 26 are suspended from a chassis 25 of the trailer portion so that the wheels rotate about axes 28.

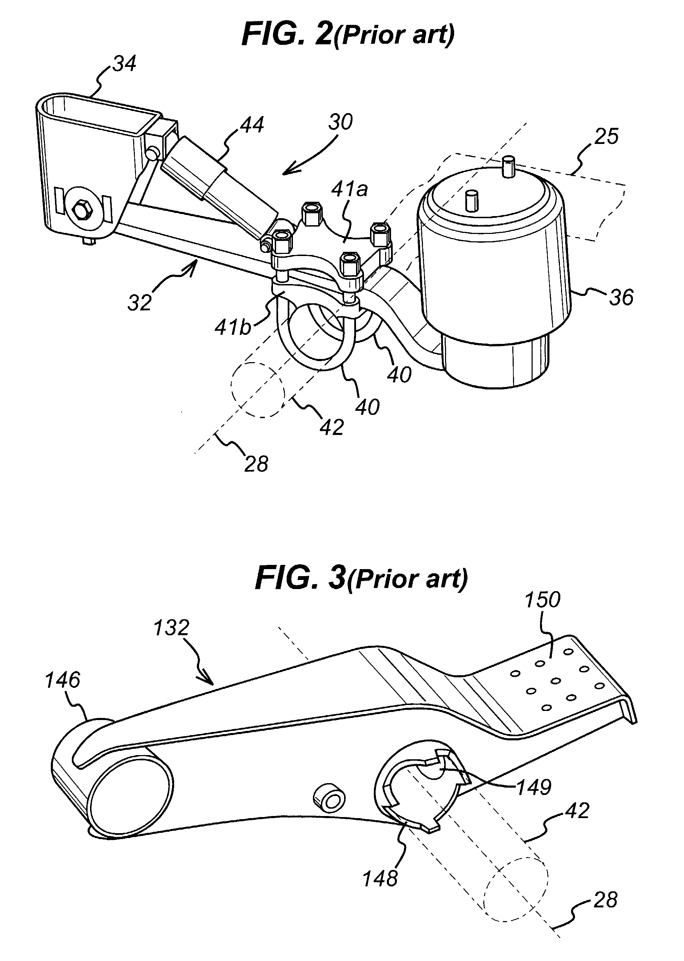

Figure 2 shows a prior art suspension assembly 30, which briefly comprises a spring steel suspension arm 32, a chassis support bracket 34 and an air spring 36. The support bracket 34 and air spring 36 provide a connection with, and suspension relative to, the trailer chassis 25 (shown in broken lines for clarity) in a known manner. U-bolts 40 and top and bottom plates 41a and 41b provide a means of mounting an axle 42 (shown in broken lines for clarity) to the trailing arm 32. In particular it should be noted that bottom plate 41b is welded directly to axle 42. Wheels (not shown) are secured to each end of the axle 42 for rotation about axis 28. A damper 44 mounted between support bracket 44 and U-bolt and plate assembly 40 is provided to damp oscillations of the axle 44 relative to the chassis 25 as the vehicle 20 drives over uneven ground.

A fabricated steel trailing arm 132 of a prior art design is shown in Figure 3 and comprises a bush 146 housing a resilient bearing (not shown) to enable the arm to be mounted to a chassis support bracket and an integrated axle wrap 148 to support axle 42 of the vehicle 20. The axle wrap 148 is first welded to the axle 42 around the periphery of openings 149 (only one visible in Figure 3, but two are present on the wrap 148) and the remainder of the arm is then welded to the axle wrap. The arm 132 is further provided with a surface 150 upon which an air spring (not shown) may be mounted.

It will be appreciated that for both types of prior art trailing arm described above, a considerable amount of assembly is required and a large number of components are needed to provide a complete suspension assembly.

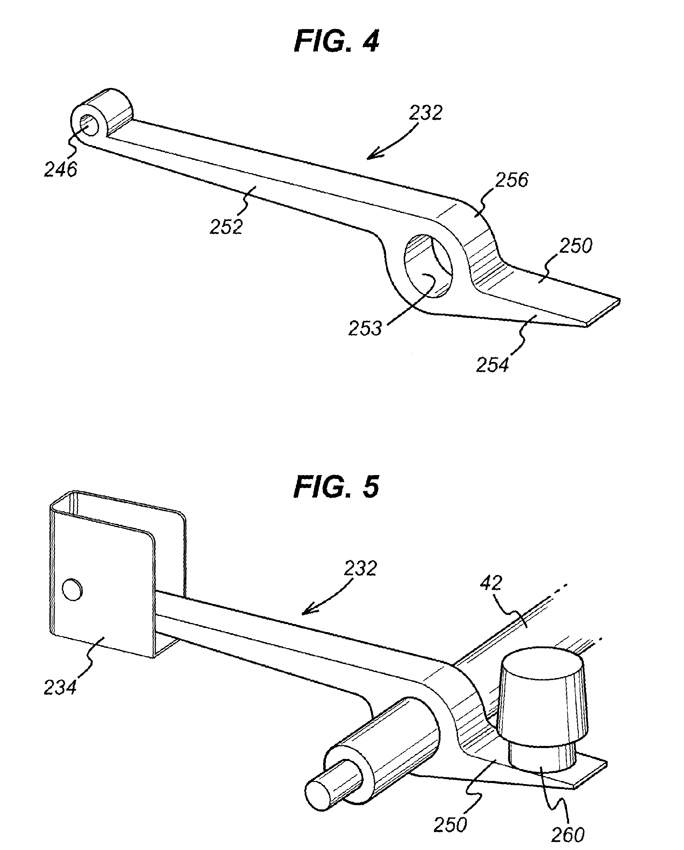

Figure 4 shows a trailing arm 232 according to the present invention, to which a conventional axle 42 is mounted (shown in figure 5) Such axles are typically capable of each carrying 6 or more tonnes of payload in use. The trailing arm 232 is made as a single piece from a composite material.

The trailing arm 232 has a front portion 252 and a rear portion 254 separated by an axle locating portion in the form of an axle wrap 256 dimensioned to receive the axle 42 therethrough. The wrap 256 and the axle 42 are oval in form so as to assist in preventing rotation between the axle and the trailing arm. A suitable adhesive is also applied between the inside surface 253 of the wrap and the axle 42 to further prevent rotation between the axle and the trailing arm. In other classes of embodiment, a circular axle may be used, with adhesive preventing relative rotation or lateral movement between the arm 232 and axle 42.

The leading end of the front portion 252 includes a bearing mounting 246 to receive a resilient bearing (not shown) that mounts the trailing arm 232 to a chassis support bracket 234 in a similar manner to the prior art. The support bracket is in turn secured to the underside of the vehicle chassis 25 (shown in broken lines in figure 5). In other embodiments the connection between the chassis support bracket and the trailing arm may not have a resilient bearing, requiring a pivotal connection only. In this case the flexibility between the chassis and the axle is provided by the trailing arm alone.

The rear portion 254 is provided with an upwardly facing substantially planar surface 250 upon which an air spring 260 may be received. Through holes (not shown) may also be provided on surface 250 in order to securely locate the air spring 260 on the surface by the use of bolts therethrough, for example.

The composite used for the trailing arm comprises a matrix material and a reinforcement material. Suitable trailing arm materials include a matrix of epoxy resin reinforced with carbon fibre. Other suitable materials having sufficient strength and durability properties for this particular application are also envisaged. Combinations of reinforcing fibres can also be used so as to enable different compositions to be used in different areas of the arm according to mechanical requirements.

One suitable technique to produce the trailing arm is the moulding of layers of preimpregnated tape. The tape consists of unidirectional fibres surrounded by resin. The tape is stacked in layers and then compacted and heated to form the required shape of the trailing arm. The tape is stacked such that the fibres are substantially orientated in the longitudinal direction of the trailing arm (indicated by arrow L).

Another suitable technique to produce the trailing arm is by filament winding. A continuous strand of preimpregnated fibres or tape is wound onto a mandrel, the mandrel being removed after the resin is cured in an oven.

The techniques outlined above enable a trailing arm to be produced with a majority of the fibres running in the direction of the length of the trailing arm. The thickness of the final trailing arm shape and the section of the arm is determined by the strength and stiffness requirements of the arm. In particular, the arm will typically require sufficient lateral strength and stiffness to resist lateral cornering loads, whilst having torsional compliance to allow the wheels and axle to ride over uneven terrain (dependent on the characteristics of the resilient bearing).

In some embodiments, surfaces of the arm 232 are machined to provide a suitable surface finish for fitment to the axle or other components. Furthermore, holes may be drilled in the arm for the fitment of additional components, such as dampers, for example.

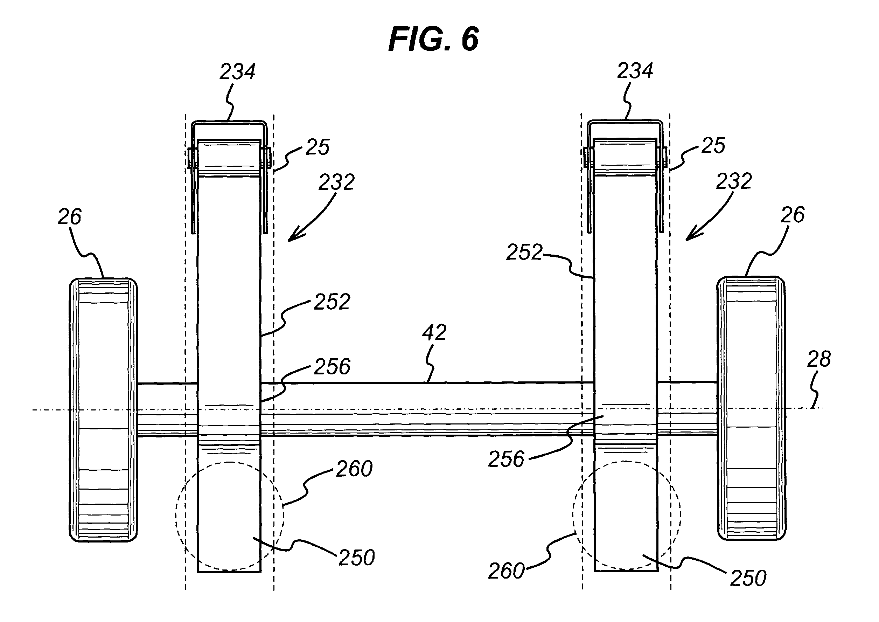

With reference to Figure 6 a suspension assembly incorporating two trailing arms 232 mounted substantially in line with chassis rails 25 (shown in broken lines for clarity) and secured thereto via hangar brackets 234 is shown. It can be seen that a beam axle 42 extends through axle wraps 256 and has wheels 26 mounted each end thereof.

It should be understood that terms such as front, rear, top and bottom as used herein to describe the orientation of the various components are for illustrative purposes only and should not be construed as limiting with respect of the orientation in which the trailing arm may be fitted in a particular vehicle. It should be understood that arms according to the present invention may also be used as leading arms in which the mounting bracket is arranged aft of the air spring on a vehicle.

It will further be appreciated that numerous changes may be made within the scope of the present invention. The arm may be adapted for use with alternatives to air springs, such as coil springs, for example, and may fitted to monocoque type chassis. Additional features may be included in the shape of the trailing arm for mounting other suspension components. The arm may be adapted to receive non-circular (e.g. square) axles and may mount stub as well as beam axles.

## Claims

1. A composite suspension trailing arm (232) for heavy commercial vehicles.

2. A composite trailing arm according to claim 1 in which an axle locating portion (256) is integral with the arm.

3. A composite trailing arm according to claim 2 in which the axle locating portion is rotationally securable to an associated axle (42) by an adhesive.

4. A composite trailing arm according to claim 2 or 3 in which the axle locating portion is non-circular.

5. A composite trailing arm according to any preceding claim in which the arm is provided with a feature (246) to mount the arm to a chassis component of a vehicle.

6. A composite trailing arm according to any preceding claim in which a surface (250) for an air spring (260) is integral with the arm.

7. A composite trailing arm according to claim 2 and further comprising a spring mounting feature (250) integral with the arm and a feature (246) to mount the arm to a chassis component of a vehicle, wherein the axle locating feature is mounted intermediate the spring mounting feature and the chassis mounting feature.

8. A composite trailing arm according to any preceding claim in which the composite includes a matrix material and a reinforcement material, the reinforcement material preferably being carbon fibre and the matrix material preferably being epoxy resin.

9. A suspension assembly comprising first and second trailing arms (232) according to any preceding claim arranged in spaced, substantially parallel alignment and further comprising a beam-type axle (42) rigidly secured to the first and second arms and extending therebetween.

10. A method of making a trailing arm (232) for heavy commercial vehicles comprising the steps of:
providing a matrix material,
providing a reinforcement material,
arranging the matrix material and the reinforcement material so as to form a matrix reinforcement composition, then
curing the composition to form the trailing arm.

11. A method of making a trailing arm for heavy commercial vehicles according to claim 10 in which the matrix and reinforcement materials are provided as a tape comprising fibres surrounded by resin, preferably a plurality of tapes are stacked to form layers, and the layers are compacted and cured by heat to form the trailing arm.

12. A method of making a trailing arm for heavy commercial vehicles according to claim 10 in which the matrix and reinforcement materials are provided as a filament comprising a single fibre surrounded by resin.

13. A method of making a trailing arm for heavy commercial vehicles according to claim 11 or 12 in which the tape or filament is wound onto a mandrel, the tape or filament is cured to form the trailing arm, and then the mandrel is removed.

14. A method of making a trailing arm for heavy commercial vehicles according to any one of claims 11 to 13 in which the fibres are arranged such that they are substantially orientated in the longitudinal direction of the trailing arm.
